# EUROPÄISCHE PATENTSCHRIFT

(11) **EP 0 576 859 B1**
(45) Veröffentlichungstag und Bekanntmachung des Hinweises auf die Patenterteilung: **14.08.1996**
(21) Anmeldenummer: 93108994.0
(22) Anmeldetag: 04.06.1993
(51) Int. Cl.: F16J 15/00, F16J 15/34

(54) **Turbomaschine mit axialer Trockengasdichtung**
Turbo machine with axial dry gas seal
Turbomachine avec joint axial sans contact

(30) Priorität: 02.07.1992 CH 2088/92
(43) Veröffentlichungstag der Anmeldung: 05.01.1994
(73) Patentinhaber: Sulzer Turbo AG, CH-8005 Zürich (CH)
(72) Erfinder: Schmohl, Hans, CH-8854 Galgenen (CH); Lorenzen, Heinrich, CH-5417 Untersiggenthal (CH)
(74) Vertreter: Heubeck, Bernhard

(56) Entgegenhaltungen:
- WO-A-91/06793
- WO-A-91/09240
- GB-A- 2 204 366

## Beschreibung

Die Erfindung betrifft eine Turbomaschine mit einer wenigstens an einer Seite der durch das Maschinengehäuse geführten Rotorwelle vorgesehenen axialen Dichtungsanordnung mit wenigstens einer gegen höheren Innendruck dichtenden Trockengasgleitringdichtung, welche mit Sperrgas beaufschlagt ist, und dessen Leckage über eine Leckageleitung abführbar ist.

Maschinen dieser Art sind beispielsweise aus DE 39 25 403 bekannt und dienen beispielsweise als Turbokompressoren oder Gasturbinen. Dabei ist der Rotor der Turbomaschine in einem geschlossenen Gehäuse angeordnet, dessen Innenraum unter höherem Gasdruck steht. Die Durchführung der Rotorwelle durch das Gehäuse nach aussen oder zu einer Zwischenkammer ist mittels einer Dichtungsanordnung abgedichtet, um ein Ausströmen des Druckgases aus dem Innenraum zu verhindern. In der Regel ist dabei bei an beiden Seiten des Rotors durch das Gehäuse geführten Wellen auch an beiden Seiten eine derartige Dichtungsanordnung vorgesehen, oder bei nur einseitig vorgesehenen Wellendurchführungen bei Maschinen vom Ueberhangtyp nur an dieser einen Wellendurchführung.

Als besonders reibungs- und verlustarm haben sich hierfür Trockengasdichtungen erwiesen, die mit einem Sperrgas beaufschlagt sind, wobei die Gleitfläche eines Gleitringes an eine entsprechende Dichtfläche gedrückt wird, unter Beibehaltung eines minimalen Spaltes, und somit den Austritt des Druckgases aus dem Innenraum minimalisiert, wobei die Leckage der Dichtung auf einem kleinstmöglichen Wert gehalten und gleichzeitig ein Spalt zum berührungslosen Lauf der Dichtung gebildet wird. Die geringe trotzdem noch vorhandene Leckage wird dabei in der Regel nach aussen abgeführt. Bei geringeren Drücken genügt in der Regel eine einzige Trockengasdichtung. Bei höheren Drücken ist jedoch zur Erzielung einer grösseren Sicherung der primären inneren Trockengasdichtung eine sekundäre analog aufgebaute äussere Trockengasdichtung nachgeschaltet, welche den inneren Leckageraum gegen aussen abdichtet. Diese äussere Trockengasdichtung tritt dabei vorzugsweise nur dann in Aktion und wird wirksam, wenn die primäre Leckage zu gross wird, insbesondere bei einem Defekt der vorgeschalteten Trockengasdichtung. Nötigenfalls können auch mehr als zwei Trockengasdichtungen hintereinander geschaltet sein.

Bei Turbomaschinen, welche gefährliche, insbesondere explosive oder toxische Gase verarbeiten, ist es besonders wichtig und dringend erforderlich, den Austritt des gefährlichen, unter Druck stehenden Gases aus dem Gehäuseinnenraum zu verhindern oder auf ein ungefährliches Mass zu reduzieren, um eine Katastrophe zu vermeiden. Dazu werden an den gefährdeten Stellen der Maschine, beispielsweise in der Nähe der Gasdurchführungen geeignete Gassensoren vorgesehen, welche mit Vorteil eine spezifische Detektionsempfindlichkeit für das nachzuweisende Gas aufweisen, und welche bei Ueberschreitung einer bestimmten Gaskonzentration ein Warn- oder Alarmsignal auslösen oder geeignete Bekämpfungsmassnahmen in Gang setzen. Dies erfordert jedoch eine zusätzliche komplizierte Einrichtung, welche zudem erst dann reagieren kann, wenn bereits eine zur Signalauslösung genügende Gasmenge aus dem Gehäuse ausgetreten ist. Die dadurch bedingte Zeitverzögerung reicht häufig nicht aus, um eine Katastrophe vollständig zu verhindern.

Eine weitere Möglichkeit zur Ueberwachung einer doppelten Gleitringdichtung in Tandemanordnung für Flüssigkeiten wird in der GB-A-2 204 366 gezeigt. An den Zwischenraum zwischen der inneren und äusseren Gleitringdichtung ist eine Leitung angeschlossen, welche zunächst in einem Umschaltventil endet, um nacheinander verschiedene Funktionen erfüllen zu können. In einer ersten Betriebsstellung ist das Umschaltventil geschlossen und ermöglicht bei unzulässigem Druckanstieg die Auslösung eines Alarms. Ein solcher Alarm wird ausgelöst, wenn die innere Gleitringdichtung defekt ist und die äussere Gleitringdichtung noch funktionstüchtig ist. Der Alarm wird nicht ausgelöst, wenn die äussere Gleitringdichtung beim Versagen der inneren Gleitringdichtung schon defekt ist. Aus diesem Grund muss die Funktionstüchtigkeit der äusseren Gleitringdichtung immer wieder überprüft werden, indem man über das Umschaltventil den Zwischenraum zwischen den Gleitringdichtungen in willkürlich zu wählenden Abständen mit einem Hilfsdrucksystem verbindet, um die Dichtheit der äusseren Gleitringdichtung mittels Druckablesung zu überprüfen. Man ist also nie ganz sicher, ob der Alarm im Bedarfsfall auch wirklich ausgelöst wird, da er von der Funktionstüchtigkeit einer weiteren Gleitringdichtung abhängt, deren Funktionieren theoretisch ständig überprüft werden müsste und die aus einem verschleissbehafteten Element mit elastischen Dichtungen besteht.

Die Erfindung setzt sich die Aufgabe, die oben aufgeführten Nachteile des Standes der Technik zu vermeiden und insbesondere eine Turbomaschine der eingangs angegebenen Art derart weiterzubilden, dass ein Defekt der Trockengasdichtung und ein unzulässiger Gasaustritt durch die Wellendichtungen schnellstmöglich und ohne Zeitverzögerung mit grösserer Sicherheit signalisiert und verhindert wird.

Erfindungsgemäss wird diese Aufgabe mit den Merkmalen vom Anspruch 1 gelöst.

Mit Vorteil wird das Drucksignal dazu benützt, die Turbomaschine unverzüglich abzuschalten, um den Gasdruck im Innenraum abzusenken und einen Gasaustritt ohne Zeitverzögerung zu verhindern.

Bei der Ausbildung als Tandem- oder Mehrfachdichtung ist es von Vorteil, auch den inneren Leckagedruck zu überwachen und die Ueberschreitung eines Schwellenwertes zu signalisieren, beispielsweise durch ein Warn- oder Alarmsignal, während bei einem Anstieg des äusseren Leckagedruckes die Turbomaschine unverzüglich automatisch abgeschaltet wird.

Die Erfindung wird anhand der in den Figuren dargestellten Ausführungsbeispiele näher erläutert.

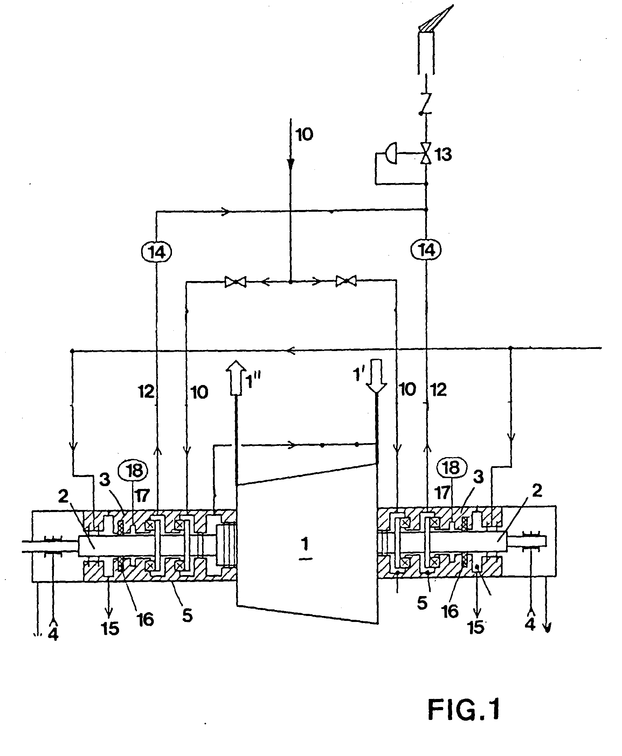

- Fig. 1: zeigt eine Turbomaschinenanlage mit Trockengasdichtungen in schematischer Form;
- Fig. 2: zeigt einen Detailausschnitt einer einfachen Trockengasdichtungsanordnung einer Wellendurchführung zur Verwendung in der in Fig. 1 dargestellten Turbomaschinenanlage;
- Fig. 3: zeigt einen Detailausschnitt einer Tandem-Trockengasdichtung für die gleiche Verwendung.

Bei dem in den Figuren dargestellten Beispiel einer Turbomaschinenanlage mit einem Turbokompressor 1 ist die Rotorwelle 2 durch das nur im Durchführungsteil im Detail wiedergegebene Turbomaschinengehäuse 3 beidseits hindurchgeführt und in geeigneter Weise, beispielsweise in Magnetlagern 4 gelagert. Gegen das Gehäuse 3 ist die Welle 2 mittels Trockengasdichtungen 5 abgedichtet, welche den Gasaustritt aus dem Inneren der Turbomaschine 1 sowohl an der Gaseintrittsseite 1' als auch an der Austrittsseite 1'' bis auf eine unschädliche Leckage verhindern. Somit wird vermieden, dass das in der Maschine unter einem gewissen Druck stehende Gas in die Umgebung gelangt, und insbesondere im Falle eines toxischen oder explosiven Druckgases eine gefährliche Situation hervorrufen kann.

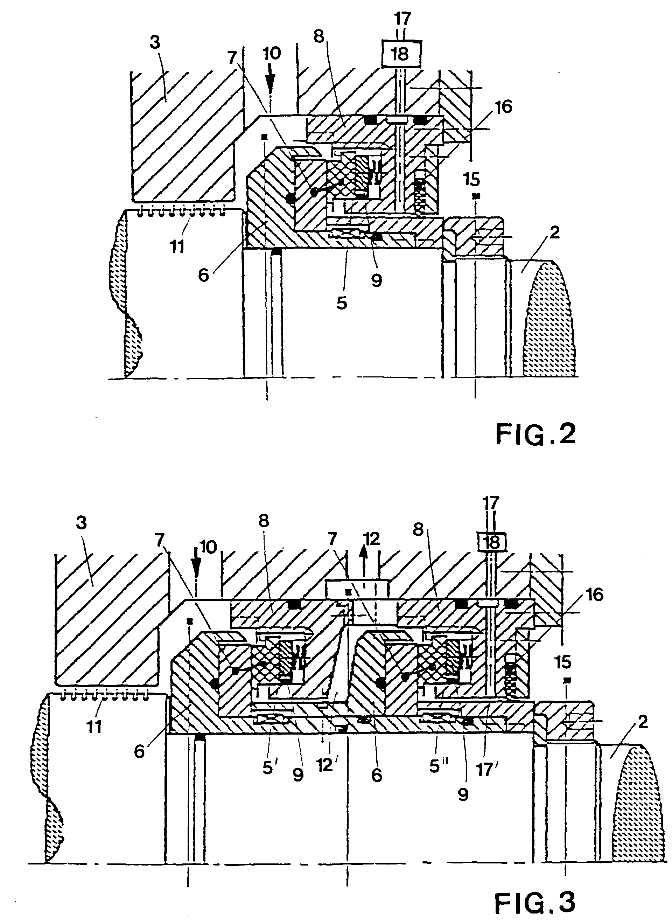

Die Dichtungsanordnung 5 weist, wie insbesondere aus Fig. 2 ersichtlich ist, eine mitrotierende Wellenbüchse 6 auf, die einen Dichtkörper 7 trägt, beispielsweise aus Siliziumkarbid oder einem anderen geeigneten Material. Auf der Gegenseite weist die Dichtung einen in das Gehäuse 3 eingelassenen stationären Dichtungshalter 8 auf, der an seiner Innenseite einen axial etwas verschiebbaren Gleitring 9 trägt, beispielsweise mit einer Gleitfläche aus einem kohlekeramischen Werkstoff.

Ueber eine Leitung 10 wird der inneren Trockengasdichtung 5 ein trockenes und sauberes Sperrgas mit einem gewissen Druck, der höher ist als der Druck im Gehäuseinneren zugeführt. Dieses Sperrgas blockiert dadurch einerseits den Austritt des Druckgases aus dem Gehäuseinneren, wobei eine weitere Dichtung 11, die als Labyrinthdichtung oder als weitere Trockengasdichtung ausgebildet sein kann, an der Innenseite der Wellendurchführung vorgesehen ist. Weiterhin gelangt das Sperrgas auf die Rückseite des stationären Gleitringes 9 und drückt diesen, gegebenenfalls unterstützt durch Federkraft, gegen den rotierenden Dichtkörper 7 an der Wellenbüchse 6, so dass zwischen Gleitring und Dichtkörper ein Gasfilm mit einem minimalen Spalt gebildet wird. Die durch die Trockengasdichtung 5 bzw. den Dichtspalt doch noch hindurchtretende Leckage wird über die Leckageleitung 17 auf unschädliche Weise abgeführt, beispielsweise aufgefangen oder abgefackelt. In der Leckageleitung 17 ist weiter eine Stauvorrichtung in der Form einer die Welle 2 umschliessenden, ringförmigen Stauscheibe 16 vorgesehen sowie eine Messeinrichtung 18, welche ein Signal auslöst, sobald die Leckage in Leitung 17 ein vorgegebenes Mass überschreitet, und somit das Bedienungspersonal auf einen möglichen oder beginnenden Defekt der Trockengasdichtung hinweist, bzw. die Turbomaschine ohne Verzögerung automatisch abschaltet.

Bei dem in Fig. 3 dargestellten Beispiel ist einer inneren primären Trockengasdichtung 5' eine analog aufgebaute äussere sekundäre Trockengasdichtung 5" nachgeschaltet, welche zwischen dem primären Leckageraum 12' und der Aussenseite 15 des Gehäuses arbeitet. Solange die Primärleckage 12 gering ist, läuft die sekundäre Trockengasdichtung 5" nahezu leer mit, in dem sie nur einen geringen Druckunterschied überbrücken muss, da der für ein Druckbegrenzungsventil 13 in der primären Leckageleitung 12 vorgegebene Druck nicht erreicht ist. Sobald jedoch die Leckage im primären Leckageraum 12', beispielsweise infolge einer langsamen Verschlechterung oder eines Defektes der primären Dichtung 5' zunimmt, wird mittels eines Druckmessgerätes 14 in der primären Leckageleitung 12 ein Signal erzeugt, sobald der durch das Ventil 13 aufgestaute Druck einen bestimmten Wert übersteigt, so dass das Bedienungspersonal gewarnt und alarmiert wird, andererseits erfüllt nun die sekundäre Dichtung 5" die Funktion einer Sicherheitsdichtung und fängt die sich aufbauende Druckdifferenz auf. Im Falle eines Defektes der Primärdichtung 5' kommt also die Sekundärdichtung 5" zum Einsatz und verhindert einen Gasaustritt aus dem Gehäuseinneren. Normalerweise ist dadurch auch im Falle eines Defektes der primären inneren Gasdichtung eine ausreichende Sicherheit gegen das Austreten von Gas gegeben, und es steht eine gewisse Zeit zur Verfügung, um die Ursache der vergrösserten primären Leckage festzustellen, ohne die Anlage unverzüglich abstellen zu müssen.

Es ist jedoch möglich, dass auch die normalerweise leer mitlaufende sekundäre äussere Gasdichtung im Laufe der langen Betriebszeit nachlässt oder defekt wird, ohne dass dies bemerkt wird, da ja die sekundäre Dichtung in der Regel keine Funktion zu erfüllen hat, solange die primäre innere Gasdichtung einwandfrei arbeitet. In diesem Fall würde bei einem Defekt der inneren Gasdichtung die nachgeschaltete äussere Gasdichtung ebenfalls versagen und es würde gefährliches Gas austreten.

Um dies zu verhindern, ist an der Ausgangsseite der äusseren sekundären Gasdichtung 5" eine kreisringförmige Stauscheibe 16 vorgesehen, welche die sekundäre Leckage in einem Drucküberwachungsgerät 18, welches an die Leckageleitung 17 bzw. den sekundären Leckageraum 17' angeschlossen ist, aufstaut. Sobald der Staudruck in der Drucküberwachungseinrichtung 18 einen vorgegebenen Druckwert überschreitet, wird die Turbomaschine 1 automatisch abgeschaltet, und zwar auf direktem Wege durch die Sekundärleckage selbst, d.h. ohne den Umweg über andere Messeinrichtungen und ohne Zeitverzögerung. Somit wird auch bei dem wenig wahrscheinlichen gleichzeitigen Ausfall der primären und der sekundären Gasdichtungen eine Gefahrensituation mit grösstmöglicher Sicherheit verhindert.

Mit Vorteil wird auch die sekundäre äussere Gasdichtung 5" mit einem kleinen, konstanten Druck beaufschlagt, der mittels des Druckbegrenzungsventils 13 gehalten wird. Dieser kleine Druck ist geeignet, die Funktionsfähigkeit der Sekundärdichtung 5'' dauernd zu überprüfen, auch wenn die Primärdichtung 5' noch in einwandfreiem Zustand ist.

Als Alternative zur Abzweigung 12 zum Druckbegrenzungsventil 13 könnte analog zur Sekundärdichtung 5" nach der Primärdichtung 5' ebenfalls eine Stauscheibe mit entsprechender Druckmessung zur Ueberwachung der Primärleckage vorgesehen werden.

Die Messung des Staudruckes kann durch direkte Druckmessung erfolgen, oder durch Bestimmung einer vom Druck abhängigen Messgrösse, z.B. der Durchflussmenge, die sich aus der Druckdifferenz und dem Strömungswiderstand der Leitungen ergibt.

Das Staudrucksignal kann wahlweise zur Alarmierung des Bedienungspersonals dienen, oder zur automatischen Abschaltung der Anlage. Bei der Ausbildung als Tandem-oder Mehrfachdichtung kann zwar ebenfalls durch jede Dichtung wahlweise ein Alarmsignal oder ein Abschaltbefehl ausgelöst werden, mit besonderem Vorteil kann jedoch durch den Staudruck der inneren Dichtung, oder im Falle von drei oder mehr Dichtungen, der inneren Dichtungen, ein Alarmsignal erzeugt und durch den Staudruck der äusseren Dichtung die Maschinenanlage automatisch abgeschaltet werden.

## Patentansprüche

1. Turbomaschine mit einer wenigstens an einer Seite durch das Maschinengehäuse (3) geführten Rotorwelle (2) vorgesehenen axialen Dichtungsanordnung (5) mit wenigstens einer gegen einen höheren Innendruck dichtenden Trockengasgleitringdichtung (7, 9), welche mit Sperrgas beaufschlagt ist und dessen Leckage über eine Leckageleitung abgeführt wird, dadurch gekennzeichnet, dass an der Leckageseite der Trockengasgleitringdichtung (7, 9) eine kreisringförmige, die Welle (2) umschliessende Stauscheibe (16) angeordnet ist, welche zur Bildung eines geschlossenen Raumes (17') und zur Stauung der Leckage der Dichtung (7, 9) fest mit dem Gehäuse (3) verbindbar ist, sowie dass an diesen Raum eine Drucküberwachungsvorrichtung (17, 18) angeschlossen ist, um einen mit erhöhter Leckage wachsenden Staudruck festzustellen und eine Signalgabe bei Ueberschreitung eines vorgegebenen Staudruckes vorzusehen.

2. Turbomaschine nach Anspruch 1, dadurch gekennzeichnet, dass die Staudruck-Ueberwachungseinrichtung (17, 18) eingerichtet ist, die Turbomaschine (1) bei Ueberschreitung eines vorgegebenen Staudruckes abzuschalten.

3. Turbomaschine nach Anspruch 1 oder 2, dadurch gekennzeichnet, dass die Staudruck-Ueberwachungseinrichtung (17, 18) eingerichtet ist, ein Alarm- oder Warnsignal auszulösen, sobald der Staudruck einen vorgegebenen Schwellenwert überschreitet.

4. Turbomaschine nach einem der Ansprüche 1 bis 3, dadurch gekennzeichnet, dass die Dichtungsanordnung (5) wenigstens zwei hintereinandergeschaltete Trockengasgleitringdichtungen (5', 5") aufweist, deren äusserste Trockengasgleitringdichtung (5") mit der Stauscheibe (16) ausgerüstet ist, mittels der bei Ueberschreitung eines vorgegebenen Staudruckes die Turbomaschine abschaltbar ist.

5. Turbomaschine nach Anspruch 4, dadurch gekennzeichnet, dass die innere Trockengasgleitringdichtung (5') auf der Leckageseite mit einer Abzweigung (12) zu einem Druckbegrenzungsventil (13) ausgerüstet ist, mittels der über ein eingebautes Druckmessgerät (14) bei Ueberschreitung eines vorgegebenen Staudruckes ein Warn- oder Alarmsignal auslösbar ist.

6. Turbomaschine nach Anspruch 5, dadurch gekennzeichnet, dass in die Abzweigung (12) ein kleiner, konstant gehaltener Druck einspeisbar ist, um die Funktionstüchtigkeit der Sekundärdichtung (5") dauernd zu überprüfen.

## Claims

1. Turbo-machine comprising an axial sealing arrangement (5) provided at a rotor shaft (2) that leads through the machine housing (3) at at least one end, the axial sealing arrangement having at least one dry gas sliding ring seal (7, 9), which seals against a higher internal pressure and which is acted on by blocking gas and the leakage of which is led away via a leakage line,
**characterized in that**
a circular ring shaped static disc (16) surrounding the shaft (2) is arranged at the leakage side of the dry gas sliding ring seal (7, 9), and can be connected firmly to the housing (3) for the formation of a closed space (17) and for accumulation of the leakage of the seal (7, 9), and in that a pressure monitoring device (17, 18) is connected to this space in order to detect an accumulation pressure growing with increased leakage, and to provide a signal transmission on exceeding a predetermined accumulation pressure.

2. Turbo-machine in accordance with claim 1,
**characterized in that**
the accumulation pressure monitoring device (17, 18) is designed to switch off the turbo-machine (1) on exceeding a predetermined accumulation pressure.

3. Turbo-machine in accordance with claim 1 or claim 2,
**characterized in that**
the accumulation pressure monitoring device (17, 18) is designed to trigger an alarm or warning signal as soon as the accumulation pressure exceeds a predetermined threshold value.

4. Turbo-machine in accordance with one of the claims 1 to 3,
**characterized in that**
the seal arrangement (5) has at least two dry gas sliding ring seals (5', 5") arranged in series, with the outermost dry gas sliding ring seal (5") being equipped with the static disc (16) by means of which the turbo-machine can be switched off on exceeding a predetermined accumulation pressure.

5. Turbo-machine in accordance with claim 4,
**characterized in that**
the inner dry gas sliding ring seal (5') is equipped at the leakage side with a branch (12) to a pressure restrictor valve (13), by means of which a warning or alarm signal can be triggered via a built-in pressure measuring device (14) on exceeding a predetermined accumulation pressure.

6. Turbo-machine in accordance with claim 5,
**characterized in that**
a small, constantly maintained pressure can be fed into the branch (12) in order to permanently check the ability of the second ring seal (5") to function.

## Revendications

1. Turbomachine comprenant un système d'étanchéité axiale (5) qui est prévu sur au moins un côté de l'arbre (2) du rotor passant à travers la bâche (3) de la machine et qui comprend au moins une garniture d'étanchéité (7, 9) à bague glissante et à gaz sec, qui assure l'étanchéité vis à vis d'une pression intérieure élevée, qui est balayée par un gaz d'arrêt et dont la fuite est évacuée par un conduit de fuite, caractérisée en ce qu'un disque annulaire de retenue (16) entourant l'arbre (2) et disposé sur le côté des fuites de la garniture d'étanchéité (7, 9) à bague glissante et à gaz sec peut être solidarisé avec la bâche (3) pour la formation d'un espace fermé (17') et pour la retenue de la fuite de la garniture d'étanchéité (7, 9) et en ce qu'un dispositif de contrôle de pression (17, 18) est raccordé à cet espace pour déceler un accroissement de pression de retenue qui augmente avec celui de la fuite et pour prévoir une émission d'un signal en cas de dépassement d'une pression prescrite de retenue.

2. Turbomachine selon la revendication 1, caractérisée en ce que le dispositif (17, 18) de contrôle de la pression de retenue est conçu pour arrêter la turbomachine (1) en cas de dépassement d'une pression prescrite de retenue.

3. Turbomachine selon la revendication 1 ou 2, caractérisée en ce que le dispositif (17, 18) de contrôle de la pression de retenue est conçu pour déclencher un signal d'alarme ou d'avertissement dès que la pression de retenue dépasse une valeur de seuil prescrite.

4. Turbomachine selon l'une des revendications 1 à 3, caractérisée en ce que le système d'étanchéité (5) comprend au moins deux garnitures d'étanchéité (5', 5") à bague glissante et à gaz sec montées à la suite l'une de l'autre et dont la garniture d'étanchéité extérieure (5") à bague glissante et à gaz sec est équipée du disque de retenue (16) à l'aide duquel la turbomachine peut être arrêtée en cas de dépassement d'une pression de retenue prescrite.

5. Turbomachine selon la revendication 4, caractérisée en ce que la garniture d'étanchéité intérieure (5') à bague glissante et à gaz sec est équipée, sur le côté fuite, d'une dérivation (12) vers un limiteur de pression (13) à l'aide duquel un signal d'avertissement ou d'alarme peut être déclenché au moyen d'un manomètre incorporé (14) en cas de dépassement d'une pression de retenue prescrite.

6. Turbomachine selon la revendication 5, caractérisée en ce qu'une faible pression, maintenue à une valeur constante, peut être envoyée dans la dérivation (12) afin de contrôler en permanence l'aptitude au fonctionnement de la garniture d'étanchéité secondaire (5").
